# EUROPEAN PATENT SPECIFICATION

(11) **EP 3 575 594 B1**
(45) Date of publication and mention of the grant of the patent: **02.03.2022**
(21) Application number: 18744991.3
(22) Date of filing: 23.01.2018
(51) Int. Cl.: F03B 13/24, F03B 13/14, E02B 3/04

(54) **OSCILLATING WATER COLUMN WAVE POWER GENERATING DEVICE USING BREAKWATER**
WELLENENERGIEERZEUGUNGSVORRICHTUNG AUF DER BASIS EINER OSZILLIERENDEN WASSERSÄULE MIT EINEM WELLENBRECHER
DISPOSITIF DE PRODUCTION D'ÉNERGIE HOULOMOTRICE À COLONNE D'EAU OSCILLANTE UTILISANT UN BRISE-LAME

(30) Priority: 26.01.2017 KR 20170012921
(43) Date of publication of application: 04.12.2019
(73) Proprietor: Korea Institute of Ocean Science & Technology, Busan 49111 (KR)
(72) Inventor: HONG, Key Yong, Daejeon 34049 (KR); KIM, Kyong Hwan, Daejeon 34061 (KR); NAM, Bo Woo, Daejeon 34195 (KR); PARK, Se Wan, Daejeon 35384 (KR); KIM, Young Duck, Daejeon 35367 (KR); KIM, Gil Won, Seoul 08339 (KR); LIM, Chnag Hyuck, Daejeon 35210 (KR); KIM, Jeong Seok, Daejeon 35246 (KR)
(74) Representative: EP&C
(86) International application number: PCT/KR2018/001025
(87) International publication number: WO 2018/139837

(56) References cited:
- CN-B- 104 373 284
- DE-A1-102009 018 560
- GB-A- 2 530 048
- JP-A- 2014 037 781
- JP-A- 2016 533 455
- KR-A- 20110 007 474
- KR-A- 20150 110 237
- KR-B1- 101 559 831
- LEE, CHANG HOON: "Development of Highly Efficient Wave Power Generation System Using Combined Resonances", NDSL , 1 September 2015 (2015-09-01), pages 1-10, XP055614376, Sejong University Retrieved from the Internet: URL:http://www.ndsl.kr/ndsl/commons/util/n dslOriginalView.do?dbt=TRKO&cn=TRKO2016000 09964&rn=&url=&pageCode=PG18

## Description

### Technical Field

The present invention relates to an oscillating water column wave power generating device using a breakwater. More particularly, the present invention relates to an oscillating water column wave power generating device using a breakwater, which is installed on a breakwater slope part for converting wave energy, generated in the sea, into electric energy. Consequentially, the device according to the present invention produces electricity according to a change of flow of sea water introduced thereinto by waves.

### Background Art

Generally, a wave power generating device converts wave energy generated from the sea into electric energy to produce electric power. At the moment when the necessity of energy use considering the current environment is being increasingly emphasized, wave power is highlighted as infinite clean energy together with solar energy.

The wave power generating device can be classified into various types according to methods of converting the wave kinetic energy. Among various types, a typical type uses a moving object type method in which a floating body floating on a water surface is forced by wave motion to move up and down or to rotate, thereby rotating a generator. Another typical type uses an oscillating water column wave power generating method in which, when the air in the air chamber is compressed and expanded according to fluctuation of water level in an air chamber due to the interaction of waves, the turbine is rotated by the air flow generated through the nozzle, thereby generating electric power.

Nevertheless, wave power generating facility can be selected from a variety of development ranges from a small scale to a large scale and may also be used as a breakwater. Since a conventional gravity type breakwater is a structure that is integrally constructed from the sea floor to the sea surface, after the breakwaters are installed, sea water circulation in a harbor is not smooth due to excessive blockage of sea water, resulting in pollution of the water quality of the harbor. In addition, the wave power generating facility using the conventional gravity type breakwater is difficult to maintain, thereby inducing a problem of rising of a power generation cost to be raised. As a result, the wave power generating facility using the conventional gravity type breakwater is not economical and, therefore, is an issue to be seriously considered.

Meanwhile, currently, as the necessity of an oscillating water column wave power generating device using a breakwater has arisen, research has actively been carried out thereon. Meanwhile, the device using the breakwater is characterized as: having one side where sea water flowing due to wave energy is provided at a location adjacent to sea surface, thereby easily introducing sea water inward; being manufactured with the same tilt angle and length as the breakwater standard, thereby being easily applicable and installable to all domestic breakwaters in Korea; and generating electric power using the wave energy generated by the sea, thereby being ecofriendly.

As a conventional technique of an oscillating water column wave power generating device using an existing breakwater, Korean Patent No. 10-1085907 (November. 16, 2011) has proposed a wave power generating apparatus of oscillating water column type capable of stably generating power regardless of changes in wave height, wave cycle, and the like by the waves; capable of having a high power density; and capable of more efficiently integrating the wave power including the wind energy existing in the ocean.

However, the above-mentioned wave power generating apparatus of oscillating water column type is a structure that is integrally constructed from the sea floor to the sea surface. After the breakwater is installed, the sea water may not be circulated due to the excessive blockage thereof, whereby the water quality of the harbor may be reduced. Because the volume of the space is changed only depending on the waves in a state where the upper part is exposed to a position above the water surface, a situation where the air cannot be compressed to high pressure occurs frequently depending on the wave status. Accordingly, the conventional oscillating water column type is inefficient due to the problem of difficulty in generating power when waves having sufficient height and cycle are not introduced.
DE-10.2009.018.560 shows a device according to the preamble of claim 1.

### Documents of Related Art

### (Patent Document 1)

Korean Patent No. 10-1085907 (Title of the invention: Wave power generating apparatus of oscillating water column type)

### Disclosure

### Technical Problem

Accordingly, the present invention has been made to solve the above problems, and an object of the present invention is to provide the oscillating water column wave power generating device using a breakwater, which is: ecofriendly due to generating electric power using the wave energy generated by the sea; provided to easily introduce sea water inward as one side where sea water is introduced inward is located at a portion below the sea surface; and convenient to apply and install to all breakwaters being manufactured with the same tilt angle and length as the standard breakwater.

### Technical Solution

In order to accomplish the above objective, the present invention provides a oscillating water column wave power generating device using a breakwater generating electric power by air being moved due to sea water flowing inward by waves, by being installed on the breakwater according to claim 1, the device including: an oscillating water column chamber extended along a breakwater slope by being provided on a top portion of a side surface of the breakwater and formed with a space allowing the sea water to be moved into an inner side thereof; a sea water inlet part, with a side of the oscillating water column chamber extended to a lower portion of the breakwater along the breakwater slope, allowing the sea water to flow into an inner side thereof by the waves; an air flow part, with an opposite side of the oscillating water column chamber extended to an upper portion of the breakwater along the breakwater slope, provided on a top portion of one side of the breakwater to allow the air being moved due to the sea water flowing into the inner side of the oscillating water column chamber to communicate with the outside; and a power generation turbine provided inside the air flow part and generating electric power by being rotated by the air being moved. According to the inventive thought, the air flow part includes air flow holes configured in a multi-stage manner to control the pressure of the air being moved in the power generation turbine, wherein the air flow part includes variable air flow holes varying a width of the air flow part to adjust the pressure of the air being moved in the power generation turbine.

In addition, the oscillating water column chamber further may include: a chamber top plate providing a travel path for the sea water flowing inward by being extended along the breakwater slope to a height of a sea surface; and a chamber bottom plate spaced apart in parallel with the chamber top plate and having a length different from the chamber top plate and being spaced apart in parallel with the chamber top plate and formed to be bent in an outward direction at an end portion of the lower side of the breakwater by being extended to a bottom portion below the sea surface along the breakwater slope, thereby allowing the sea water to be introduced inward.

In addition, the oscillating water column chamber may be provided with a same ratio as the breakwater having the ratio of 1: 1.5 of height and bottom surface length so as to be applicable to the breakwater slope.

In addition, the oscillating water column chamber may include, at an inner side thereof, a wave height meter measuring wave height of the sea water flowed inward through the sea water inlet part and an air pressure gauge measuring pressure inside the oscillating water column chamber.

In addition, the air flow part may further include air flow holes disposed respectively in front of and behind the power generation turbine with one side communicating with the oscillating water column chamber and an opposite side communicating with an outer side and configured in a symmetrical state with each other, thereby increasing pressure of the air to be moved to the power generation turbine and thus allowing the air to flow to the power generation turbine.

In addition, the oscillating water column wave power generating device using the breakwater may further include a foreign material prevention net formed at an end portion of the sea water inlet part in a grid-like net to prevent foreign material from flowing into the oscillating water column chamber together with sea water.

### Advantageous Effects

The oscillating water column wave power generating device using the breakwater according to the present invention: is manufactured in the same ratio as the standard of domestic breakwaters, thereby facilitating application and installation to all breakwaters; is provided one side thereof to be located at the portion below the sea surface, thereby facilitating the inflow of sea water being introduced at an inner tilt angle for power production; and generates electric power using wave energy generated around marine breakwaters, thereby being an ecofriendly effect.

### Description of Drawings

FIG. 1 is a perspective view showing an oscillating water column wave power generating device using a breakwater according to the present invention.
FIG. 2 is a cross sectional view showing an oscillating water column wave power generating device using a breakwater according to the present invention.
FIG. 3 is an operational-mechanism view showing an oscillating water column wave power generating device using a breakwater according to the present invention.
FIG. 4 is an enlarged view of an air flow part in an oscillating water column wave power generating device using a breakwater according to the present invention.

### Best Mode

Hereinafter, an embodiment of an oscillating water column wave power generating device 1 using a breakwater according to the present invention will be described in detail on the basis of drawings with reference to the accompanying drawings.

Thickness of lines and sizes of components shown in the drawings may be exaggerated for clarity and convenience of explanation and for those of ordinary skill in the art to easily implement the invention. However, it does not mean that the technical idea and scope of the present invention are limited thereby.

In addition, the embodiments are described below by way of example only, and not limitative of the scope of the present invention, and various embodiments may be implemented through the present invention.

Terms to be described below are defined in consideration of functions of the present invention, and definition thereof may vary depending on an intention or custom of a user and an operator and should be based on contents throughout the present specification.

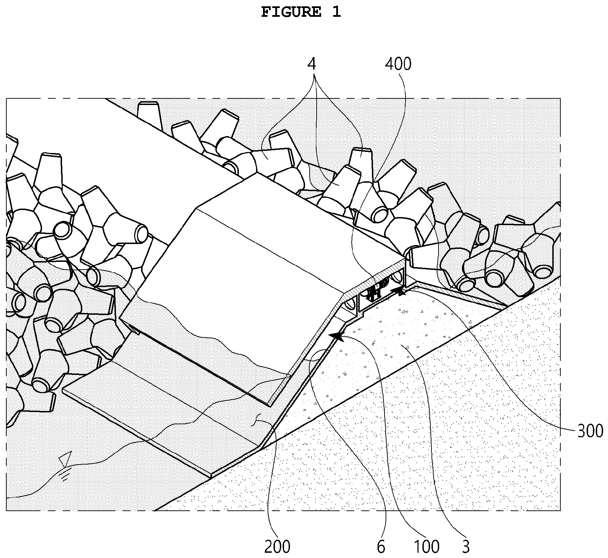

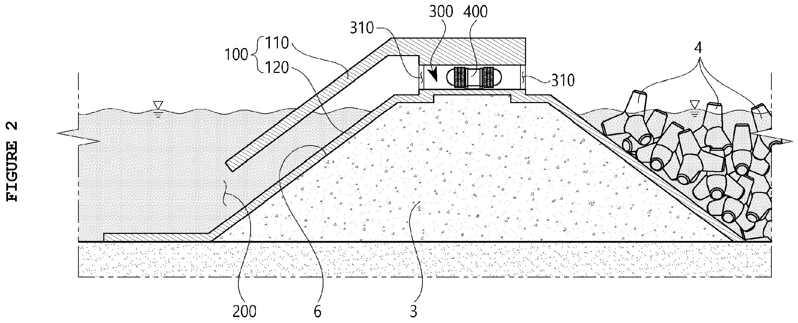

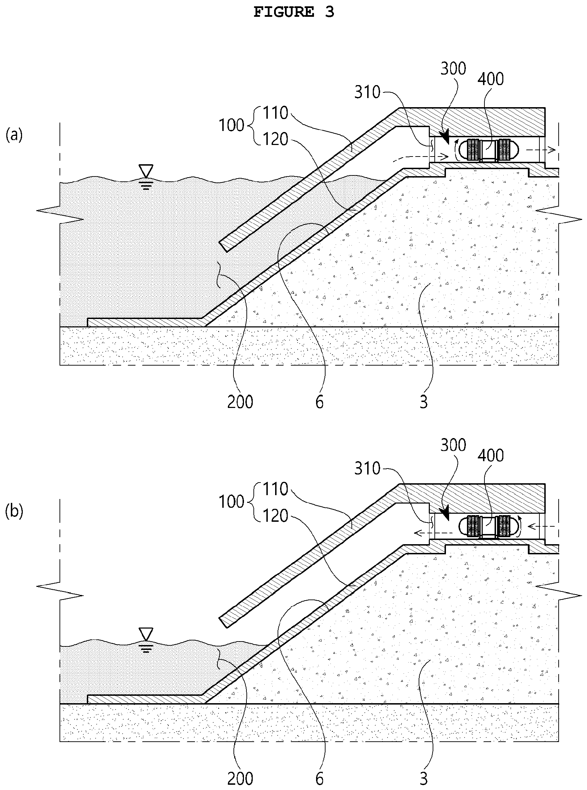

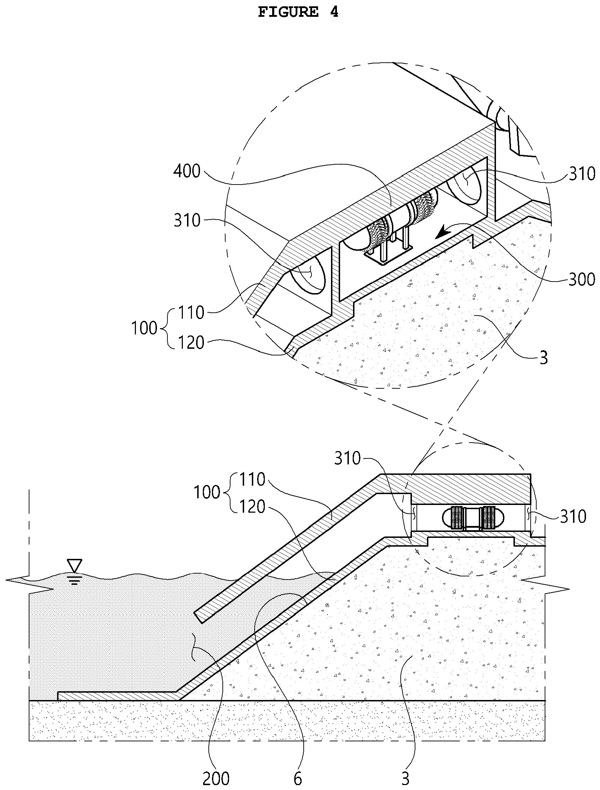

The oscillating water column wave power generating device 1 using the breakwater according to the present invention generates electric power by being installed on the breakwater and by using air being moved due to sea water flowing inward by waves. As shown in FIGS. 1 to 4, the device 1 includes: an oscillating water column chamber 100 extended along a breakwater slope 6 by being provided on a top portion of a side surface of the breakwater 3 and formed with a space allowing sea water to flow into an inner side thereof; a sea water inlet part, with a side of the oscillating water column chamber is extended to a lower portion of the breakwater along the breakwater slope, allowing the sea water to flow into an inner side thereof by the waves; an air flow part 300, with an opposite side of the oscillating water column chamber extended to an upper portion of the breakwater 3 along the breakwater slope 6, provided on a top portion of one side of the breakwater 3 to allow the air flowing due to the sea water flowing into the inner side of the oscillating water column chamber 100 to communicate with the outside; and a power generation turbine 400 provided inside the air flow part 300 and generating electric power by being rotated by the air being moved.

Here, the oscillating water column chamber 100 is provided on the top portion of the breakwater 3, wherein the oscillating water column chamber 100 is extended along the breakwater slope 6 by being provided on the top portion of the side surface of the breakwater 3 and is formed with a space allowing the sea water to flow inward. The oscillating water column chamber 100 is installed on the top portion of the breakwater 3 after a part of tetrapods 4 provided on the breakwater 3 is removed. In addition, the oscillating water column chamber 100 is provided along the breakwater slope 6 with a part thereof submerged under a sea surface and with a space provided therein allowing sea water and air to flow.

The oscillating water column chamber 100 is composed of a chamber top plate 110 and a chamber bottom plate 120 which are spaced apart in parallel with different lengths from each other.

The chamber top plate 110 is provided at a top portion of the oscillating water column chamber 100, wherein the chamber top plate 110 is extended along the breakwater slope 6 to a height of the sea surface to provide a travel path for the sea water flowing inward. More specifically, an end portion of the chamber top plate 110 is extended to the height of the sea surface and is installed in a state adjacent to the sea surface, thereby allowing the sea water to be moved inward by the waves.

The chamber bottom plate 120 is provided to be spaced apart from the chamber top plate 110, wherein the chamber bottom plate 120 has a length different from the upper plate 110 by being spaced apart in parallel with the chamber top plate 110 and formed to be bent in an outward direction at an end portion of the lower side of the breakwater 3 by being extended to a bottom portion below the sea surface along the breakwater slope 6, thereby allowing the sea water to be introduced inward. In other words, the chamber bottom plate 120 is provided with a length different from the chamber top plate 110, thereby smoothly introducing the sea water to flow toward the inner side. In addition, formed with a length longer than the chamber top plate 110, the chamber bottom plate 120 increases the amount of sea water flowing inward.

The oscillating water column chamber 100 is applicable to the breakwaters 3 that are standardized domestically in Korea. That is, the oscillating water column chamber 100 is provided with the same ratio as the breakwater, which has a ratio of 1: 1.5 of height and bottom surface length so as to be applicable to the breakwater slope 6. Accordingly, the oscillating water column chamber 100 is provided with a slope and a tilt angle the same as are calculated by a ratio of 1: 1.5 of the height and bottom surface length of the breakwater 3 and is installed on the breakwater 3.

The oscillating water column chamber 100 is provided at an inner side thereof with a wave height meter (not shown) and an air pressure gauge (not shown). More specifically, provided at an inner side of the oscillating water column chamber 100 are a wave height meter measuring the wave height of the sea water flowed inward through the sea water inlet part 200 and an air pressure gauge measuring pressure inside the oscillating water column chamber 100, whereby the water level change and the pressure inside the oscillating water column chamber 100 may be measured.

One side of the oscillating water column chamber 100 is extended to a lower portion of the breakwater 3, thereby allowing the sea water inlet part 200 to be provided. The sea water inlet part 200 receives the sea water flowing inward by the waves, with the one side of the oscillating water column chamber 100 extended to the lower portion of the breakwater 3 along the slope 6 of the breakwater. Meanwhile, as the chamber top plate 110 and the chamber bottom plate 120 are provided to have lengths different from each other, the sea water inlet part 200 is provided such that the amount of the area adjacent to the sea water increases, thereby inducing the amount of the sea water flowing into the oscillating water column chamber 100 to be increased.

A foreign material prevention net (not shown) is provided at an end portion of the sea water inlet part 200. The foreign material prevention net formed at the end portion of the sea water inlet part 200 in a grid-like net is to prevent foreign material from flowing into the oscillating water column chamber 100 together with sea water, thereby preventing odor and marine pollution caused by accumulation of foreign material into the oscillating water column chamber 100.

An opposite side of the oscillating water column chamber 100 is extended to an upper portion of the breakwater 3, thereby allowing an air flow part 300 to be provided. The air flow part 300 is provided on the top portion of a side of the breakwater 3 to allow air being moved due to the sea water flowing into the inner side of the oscillating water column chamber 100 to communicate with the outside, with the opposite side of the oscillating water column chamber 100 being extended to an upper portion of the breakwater 3 along the breakwater slope 6. Accordingly, the sea water flowing into the sea water inlet part 200 by the waves allows the air inside the oscillating water column chamber 100 to flow so that the flow energy due to the air being moved is generated in the air flow part 300.

Air flow holes 310 are provided inside the air flow part 300 to increase a pressure of the air being moved in the air flow part 300. The air flow holes 310 are each spaced apart from the power generation turbine 400 and are disposed respectively in front of and behind the power generation turbine 400. Accordingly, the air flow holes 310 through which the air flows are respectively provided, wherein the hole of one side communicates with the oscillating water column chamber 100 and the hole of an opposite side communicates with the outer side. In addition, the air flow holes 310 are configured in a symmetrical state with each other, thereby increasing pressure of the air to be moved in the power generation turbine 400 to allow the air to flow in the power generation turbine 400. By increasing the pressure of the air being moved in the power generation turbine 400 through the air flow holes 310, torque of the power generation turbine 400 is improved, whereby an amount of generated electric power is increased.

The air flow holes 310 are configured in a multi-stage manner to control the pressure of the air being moved in the power generation turbine 400 according to the desired amount of power generated by the power generation turbine 400 In this case, variable air flow holes (not shown) varying the width of the air flow unit 300 are provided to adjust the pressure of the air being moved in the power generation turbine 400.

The variable air flow hole (not shown) may be provided with an inner pipe (not shown) and an outer pipe (not shown) having widths different from each other, wherein the inner pipe is inserted inside the outer pipe. Due to the structure of the variable air flow hole, the width of the air flow unit 300 may vary by raising or lowering the inner pipe by controlling a lifting means that raises and lowers the inner pipe. Thus, it is possible to control the pressure of the air moved to the power generation turbine 400.

The power generation turbine 400 is provided inside the air flow unit 300. The power generation turbine 400 provided inside the air flow unit 300 generates electric power by being rotated by the air being moved. That is, the sea water introduced into the sea water inlet part 200 and the oscillating water column chamber 100 allows the inner side air to be moved by the waves, thereby allowing the power generation turbine 400 to be rotated. As a result, the electric power is generated by the torque of the power generation turbine 400.

The operation of the oscillating water column wave power generating device 1 using the breakwater configured as described above will be described below.

The oscillating water column chamber 100 according to an embodiment of the present invention is extended along the breakwater slope 6 by being provided on the top portion of the side surface of the breakwater 3 and is applicable to a previously installed breakwater 3. In addition, the oscillating water column chamber 100 is installed on the top portion of the side surface of the breakwater 3 after a part of tetrapods 4 seated on the existing breakwater 3 is removed and provides the travel path through which the sea water and air flow inward by the waves.

The breakwater slope 6 and the tilt angle are standardized to be calculated by the ratio of the height and the bottom surface length of the breakwater 3, wherein the ratio is 1: 1.5. Accordingly, the oscillating water column chamber 100 may be manufactured with the same ratio as the breakwater 3 so as to be applicable to the breakwater 3, thereby having an effect to be applicable to all domestic breakwaters 3 in Korea.

As the wave height meter (not shown) and air pressure gauge (not shown) provided at the inner side of the oscillating water column chamber 100 measure water level and changes in pressure inside the oscillating water column chamber 100, the pressure of the air discharged to the power generation turbine 400 may be adjusted by increasing or decreasing the width of the air flow hole 310 through which the air passes such that the amount of power generated from the power generation turbine 400 reaches the optimum efficiency.

The sea water inlet part 200 according to an embodiment of the present invention receives the sea water flowing inward by the waves, with the one side of the oscillating water column chamber 100 extended to the lower portion of the breakwater 3 along the slope 6 of the breakwater. Here, the amount of the sea water flowing into the sea water inlet part 200 is increased due to the chamber top plate 110 and the chamber bottom plate 120 provided with lengths different from each other, and the sea water flowing into the sea water inlet part 200 allows the air inside the oscillating water column chamber 100 to flow. In addition, the foreign material prevention net (not shown) formed at an end portion of the sea water inlet part 200 in a grid-like net prevents foreign material from flowing inward together with the sea water, thereby having an effect of preventing odor and marine pollution caused by accumulation of the foreign material.

The air flow part 300 according to an embodiment of the present invention allows the air to be moved by the sea water flowing into the sea water inlet part 200 and inner side of the oscillating water column chamber 100, with the opposite side of the oscillating water column chamber 100 is extended to the upper portion of the breakwater 3 along the breakwater slope 6. Consequently, the air being moved inside the air flow part 300 is converted into reciprocating flow energy that is able to rotate the power generation turbine 400.

The air flow holes 310 provided in the air flow part 300 are disposed respectively in front of and behind the power generation turbine 400 so that the hole of one side communicates with the oscillating water column chamber 100 and the hole of the opposite side communicates with the outside, thereby allowing the air to be moved to the power generation turbine 400. Accordingly, by increasing the pressure of the air being moved into the power generation turbine 400 through the airflow holes 310, the torque of the power generation turbine 400 is improved, thereby inducing an effect to increase the amount of electric generation.

The power generation turbine 400 according to an embodiment of the present invention generates electric power by the power generation turbine 400 being rotated by the air being moved in the air flow part 300. That is, the impeller (not shown) of the power generation turbine 400 is rotated by the air discharged to the power generation turbine 400, thereby generating electric power.

The above description is only one embodiment for implementing the oscillating water column wave power generating device 1 using the breakwater according to the present invention. Accordingly, the present invention is not limited to the above-described embodiments, and it will be understood by those of ordinary skill in the art that various changes in form and details may be made therein without departing from the scope of the invention as defined in the appended claims.

### [Reference Numerals]

3: breakwater 4: tetrapod
6: breakwater slope 100: oscillating water column chamber
110: chamber top plate 120: chamber bottom plate
200: sea water inlet part 300: air flow part
310: air flow hole 400: power generation turbine

### Industrial Applicability

The oscillating water column wave power generating device using the breakwater according to the present invention: is manufactured in the same ratio as the standard of domestic breakwaters, thereby facilitating application and installation to all breakwaters; is provided one side thereof to be located at the portion below the sea surface, thereby facilitating the inflow of sea water being introduced at an inner tilt angle for power production; and generates electric power using wave energy generated around marine breakwaters, thereby being an ecofriendly effect.

## Claims

1. An oscillating water column wave power generating device (1) using a breakwater (3) generating electric power by air being moved due to sea water flowing inward by waves, by being installed on the breakwater (3), the device (1) comprising:
- an oscillating water column chamber (100) extended along a breakwater slope (6) by being provided on a top portion of a side surface of the breakwater (3) and formed with a space allowing the sea water to be moved into an inner side thereof;
- a sea water inlet part (200), with a side of the oscillating water column chamber (100) extended to a lower portion of the breakwater (3) along the breakwater slope (6), allowing the sea water to flow into an inner side thereof by the waves;
- an air flow part (300), with an opposite side of the oscillating water column chamber (100) extended to an upper portion of the breakwater (3) along the breakwater slope (6), provided on a top portion of one side of the breakwater (3) to allow the air being moved due to the sea water flowing into the inner side of the oscillating water column chamber (100) to communicate with the outside; and
- a power generation turbine (400) provided inside the air flow part (300) and generating electric power by being rotated by the air being moved,
**characterized in that,**
the air flow part (300) includes air flow holes configured in a multi-stage manner to control the pressure of the air being moved in the power generation turbine (400), wherein the air flow part (300) includes variable air flow holes varying a width of the air flow part (300) to adjust the pressure of the air being moved in the power generation turbine (400).

2. The device of claim 1, wherein the variable air flow holes further include:
- an inner pipe;
- an outer pipe having a width different from the inner pipe; and
- a lifting means that raises and lowers the inner pipe, wherein the inner pipe is inserted inside the outer pipe.

3. The device of one of the preceding claims, wherein the oscillating water column chamber (100) further includes:
- a chamber top plate (110) providing a travel path for the sea water flowing inward by being extended along the breakwater slope (6) to a height of a sea surface; and
- a chamber bottom plate (120) having a length different from the chamber top plate (120) and being spaced apart in parallel with the chamber top plate (120) and formed to be bent in an outward direction at an end portion of the lower side of the breakwater (3) by being extended to a bottom portion below the sea surface along the breakwater slope (6), thereby allowing the sea water to be introduced inward.

4. The device of one of the preceding claims, wherein the oscillating water column chamber (100) is provided with a same ratio as the breakwater (3) having the ratio of 1: 1.5 of height and bottom surface length so as to be applicable to the breakwater slope (6).

5. The device of one of the preceding claims, wherein the oscillating water column chamber (100) includes, at an inner side thereof, a wave height meter measuring wave height of the sea water flowed inward through the sea water inlet part (200) and an air pressure gauge measuring pressure inside the oscillating water column chamber (100).

6. The device of one of the preceding claims, wherein the air flow part (300) further includes air flow holes disposed respectively in front of and behind the power generation turbine (400) with one side communicating with the oscillating water column chamber (100) and an opposite side communicating with an outer side and configured in a symmetrical state with each other, thereby increasing pressure of the air to be moved to the power generation turbine (400) and thus allowing the air to flow to the power generation turbine (400).

7. The device of one of the preceding claims, further comprising a foreign material prevention net formed at an end portion of the sea water inlet part (200) in a grid-like net to prevent foreign material from flowing into the oscillating water column chamber (100) together with sea water.

## Patentansprüche

1. Stromerzeugungsvorrichtung (1) auf Basis einer durch Wellen oszillierenden Wassersäule unter Verwendung eines Wellenbrechers (3), die elektrischen Strom durch Luft erzeugt, die aufgrund von durch Wellen einwärts strömendes Meerwasser bewegt wird, indem sie am Wellenbrecher (3) installiert ist, wobei die Vorrichtung (1) umfasst:
- eine Kammer (100) für die oszillierende Wassersäule, die sich entlang einer Wellenbrecherneigung (6) erstreckt, die an einem oberen Abschnitt einer Seitenfläche des Wellenbrechers (3) bereitgestellt ist und mit einem Raum ausgebildet ist, der es dem Meerwasser ermöglicht, in eine Innenseite davon bewegt zu werden;
- einen Meerwassereinlassabschnitt (200), wobei sich eine Seite der Kammer (100) für die oszillierende Wassersäule zu einem unteren Abschnitt des Wellenbrechers (3) entlang der Wellenbrecherneigung (6) erstreckt, wodurch das Meerwasser durch die Wellen in eine Innenseite davon strömen kann;
- einen Luftströmungsteil (300) mit einer gegenüberliegenden Seite der Kammer (100) für die oszillierende Wassersäule, die sich zu einem oberen Abschnitt des Wellenbrechers (3) entlang der Wellenbrecherneigung (6) erstreckt und an einem oberen Abschnitt einer Seite des Wellenbrechers (3) bereitgestellt ist, um zu ermöglichen, dass die Luft, die aufgrund des in die Innenseite der Kammer (100) für die oszillierende Wassersäule strömenden Meerwassers bewegt wird, mit der Außenseite in Verbindung steht; und
- eine Stromerzeugungsturbine (400), die innerhalb des Luftströmungsteils (300) bereitgestellt ist und elektrischen Strom erzeugt, indem sie durch die bewegte Luft gedreht wird,
**dadurch gekennzeichnet, dass**
der Luftströmungsteil (300) Luftströmungslöcher beinhaltet, die in einer mehrstufigen Weise dazu ausgelegt sind, den Druck der in der Stromerzeugungsturbine (400) bewegten Luft zu steuern, wobei der Luftströmungsteil (300) variable Luftströmungslöcher beinhaltet, die eine Breite des Luftströmungsteils (300) variieren, zu dem Zweck, den Druck der in der Stromerzeugungsturbine (400) bewegten Luft einzustellen.

2. Vorrichtung nach Anspruch 1, wobei die variablen Luftströmungslöcher ferner beinhalten:
- ein Innenrohr;
- ein Außenrohr, dessen Breite sich von der des Innenrohrs unterscheidet; und
- ein Hebemittel, das das Innenrohr anhebt und absenkt, wobei das Innenrohr im Außenrohr eingeführt ist.

3. Vorrichtung nach einem der vorhergehenden Ansprüche, wobei die Kammer (100) für die oszillierende Wassersäule ferner beinhaltet:
- eine Kammeroberplatte (110), die einen Bewegungspfad für das nach innen strömende Meerwasser bereitstellt, indem sie sich entlang der Wellenbrecherneigung (6) bis zu einer Höhe der Meeresoberfläche erstreckt; und
- eine Kammerbodenplatte (120) mit einer Länge, die sich von der Kammeroberplatte (120) unterscheidet, und die zur Kammeroberplatte (120) parallel beabstandet und so geformt ist, dass sie an einem Endabschnitt der unteren Seite des Wellenbrechers (3) in eine Auswärtsrichtung abknickt, indem sie sich zu einem Bodenabschnitt unterhalb der Meeresoberfläche entlang der Wellenbrecherneigung (6) erstreckt, wodurch das Meerwasser nach innen eingeleitet werden kann.

4. Vorrichtung nach einem der vorhergehenden Ansprüche, wobei die Kammer (100) für die oszillierende Wassersäule mit einem gleichen Verhältnis wie der Wellenbrecher (3) bereitgestellt ist, der ein Verhältnis von 1:1,5 zwischen Höhe und Bodenflächenlänge aufweist, so dass es auf die Wellenbrecherneigung (6) anwendbar ist.

5. Vorrichtung nach einem der vorhergehenden Ansprüche, wobei die Kammer (100) für die oszillierende Wassersäule an ihrer Innenseite einen Wellenhöhenmesser, der die Wellenhöhe des durch den Meerwassereinlassabschnitt (200) einströmenden Meerwassers misst, und einen Luftdruckmesser, der den Druck in der Kammer (100) für die oszillierende Wassersäule misst, beinhaltet.

6. Vorrichtung nach einem der vorhergehenden Ansprüche, wobei das Luftströmungsteil (300) ferner Luftströmungslöcher beinhaltet, die jeweils vor und hinter der Stromerzeugungsturbine (400) eingerichtet sind, wobei eine Seite mit der Kammer (100) für die oszillierende Wassersäule in Verbindung steht und eine gegenüberliegende Seite mit einer Außenseite in Verbindung steht und in einem symmetrischen Zustand zueinander ausgelegt sind, wodurch der Druck der zur Stromerzeugungsturbine (400) zu bewegenden Luft erhöht wird und somit die Luft zur Stromerzeugungsturbine (400) strömen kann.

7. Vorrichtung nach einem der vorhergehenden Ansprüche, ferner umfassend ein Netz zum Abhalten von Fremdkörpern, das an einem Endabschnitt des Meerwassereinlassabschnitts (200) als ein gitterartiges Netz ausgebildet ist, um zu verhindern, dass Fremdkörper zusammen mit Meerwasser in die Kammer (100) für die oszillierende Wassersäule strömen.

## Revendications

1. Dispositif (1) de production d'énergie houlomotrice à colonne d'eau oscillante utilisant un brise-lame (3), générant de l'énergie électrique par un mouvement d'air dû à un écoulement entrant d'eau de mer sous l'effet de vagues, en étant installé sur le brise-lame (3), le dispositif (1) comportant :
- une chambre (100) à colonne d'eau oscillante s'étendant le long d'une pente (6) de brise-lame en étant placée sur une partie supérieure d'une surface latérale du brise-lame (3) et formée avec un espace permettant à l'eau de mer d'être amenée dans un côté intérieur de celle-ci ;
- une partie (200) d'entrée d'eau de mer, un côté de la chambre (100) à colonne d'eau oscillante s'étendant jusqu'à une partie inférieure du brise-lame (3) le long de la pente (6) de brise-lame, permettant à l'eau de mer d'entrer dans un côté intérieur de celle-ci sous l'effet des vagues ;
- une partie (300) d'écoulement d'air, un côté opposé de la chambre (100) à colonne d'eau oscillante s'étendant jusqu'à une partie supérieure du brise-lame (3) le long de la pente (6) de brise-lame, placée sur une partie supérieure d'un côté du brise-lame (3) pour permettre à l'air qui est déplacé du fait de l'entrée de l'eau de mer dans le côté intérieur de la chambre (100) à colonne d'eau oscillante de communiquer avec l'extérieur ; et
- une turbine (400) de production d'énergie placée à l'intérieur de la partie (300) d'écoulement d'air et générant de l'énergie électrique en étant mise en rotation par l'air qui est déplacé
**caractérisé en ce que**
la partie (300) d'écoulement d'air comprend des trous d'écoulement d'air configurés de manière multi-étages pour réguler la pression de l'air qui est déplacé dans la turbine (400) de production d'énergie, la partie (300) d'écoulement d'air comprenant des trous à débit variable d'air faisant varier une largeur de la partie (300) d'écoulement d'air pour régler la pression de l'air qui est déplacé dans la turbine (400) de production d'énergie.

2. Dispositif selon la revendication 1, les trous à débit variable d'air comprenant en outre :
- un tuyau intérieur ;
- un tuyau extérieur présentant une largeur différente de celle du tuyau intérieur ; et
- un moyen d'élévation qui relève et abaisse le tuyau intérieur, le tuyau intérieur étant inséré dans le tuyau extérieur.

3. Dispositif selon l'une des revendications précédentes, la chambre (100) à colonne d'eau oscillante comprenant en outre :
- une plaque supérieure (110) de chambre ménageant un trajet de déplacement pour l'eau de mer s'écoulant vers l'intérieur en s'étendant le long de la pente (6) de brise-lame jusqu'à la hauteur d'une surface de la mer ; et
- une plaque inférieure (120) de chambre présentant une longueur différente de celle de la plaque supérieure (120) de chambre et étant espacée en parallèle avec la plaque supérieure (120) de chambre et formée de façon à être coudée en direction de l'extérieur à une partie d'extrémité du côté inférieur du brise-lame (3) en s'étendant jusqu'à une partie basse au-dessous de la surface de la mer le long de la pente (6) de brise-lame, permettant ainsi à l'eau de mer d'être introduite vers l'intérieur.

4. Dispositif selon l'une des revendications précédentes, la chambre (100) à colonne d'eau oscillante étant dotée d'un même rapport que le brise-lame (3) qui présente un rapport de 1:1,5 de hauteur et de longueur de surface inférieure de façon à être applicable à la pente (6) de brise-lame.

5. Dispositif selon l'une des revendications précédentes, la chambre (100) à colonne d'eau oscillante comprenant, au niveau d'un côté intérieur de celle-ci, un instrument de mesure de hauteur de vagues mesurant la hauteur de vagues de l'eau de mer amenée à s'écouler vers l'intérieur à travers la partie (200) d'entrée d'eau de mer et une jauge de pression d'air mesurant la pression à l'intérieur de la chambre (100) à colonne d'eau oscillante.

6. Dispositif selon l'une des revendications précédentes, la partie (300) d'écoulement d'air comprenant en outre des trous d'écoulement d'air disposés respectivement devant et derrière la turbine (400) de production d'énergie, avec un côté communiquant avec la chambre (100) à colonne d'eau oscillante et un côté opposé communiquant avec un côté extérieur et configuré symétriquement l'un à l'autre, augmentant ainsi la pression de l'air à déplacer vers la turbine (400) de production d'énergie et permettant donc à l'air de s'écouler jusqu'à la turbine (400) de production d'énergie.

7. Dispositif selon l'une des revendications précédentes, comportant en outre un filet de prévention de corps étrangers formé au niveau d'une partie d'extrémité de la partie (200) d'entrée d'eau de mer en un filet de type grille pour empêcher des corps étrangers d'entrer dans la chambre (100) à colonne d'eau oscillante en même temps que de l'eau de mer.
